# EUROPÄISCHE PATENTSCHRIFT

(11) **EP 0 741 500 B1**
(45) Veröffentlichungstag und Bekanntmachung des Hinweises auf die Patenterteilung: **26.02.2003**
(21) Anmeldenummer: 96106491.2
(22) Anmeldetag: 25.04.1996
(51) Int. Cl.: H04Q 11/04, H04M 11/06

(54) **Telekommunikationssystem und korrespondierende Netzabschlu einrichtung**
Telecommunication system and corresponding network termination unit
Système de télécommunication et dispositif de terminaison de réseau correspondant

(30) Priorität: 05.05.1995 DE 19516516
(43) Veröffentlichungstag der Anmeldung: 06.11.1996
(73) Patentinhaber: ALCATEL, 75008 Paris (FR)
(72) Erfinder: Szechenyi, Kalman, 71579 Spiegelberg (DE); Aschrafi, Bagher, 73240 Wendlingen (DE)
(74) Vertreter: Schätzle, Albin, Dipl.-Phys.

(56) Entgegenhaltungen:
- DE-A- 3 713 933
- DE-A- 4 124 118
- DE-A- 4 405 038
- GB-A- 2 166 025
- US-A- 4 698 801
- BERGKVIST J A: "FLEXNODE - EIN DIGITALES CROSS-CONNECT-SYSTEM" NTZ NACHRICHTENTECHNISCHE ZEITSCHRIFT, Bd. 44, Nr. 10, 1. Oktober 1991 (1991-10-01), Seiten 702-704, 706, 708 - 710, XP000265352 ISSN: 0027-707X

## Beschreibung

Die Erfindung betrifft ein Telekommunikationssystem und eine Netzabschlußeinrichtung.

Das Telekommunikationssystem hat die Struktur eines Telekommunikationsnetzes. Das Telekommunikationsnetz ist z.B. ein diensteintegrierendes digitales Netz, das sog. ISDN.

In dem Buch "Grundlagen der Vermittlungstechnik" (1991), von G. Siegmund, ist auf Seite 166 die Basisanschlußkonfiguration für ein diensteintegrierendes digitales Netz (ISDN) beschrieben. Dabei ist die einem Teilnehmer zugehörige Endstelle über einen Netzabschluß mit dem diensteintegrierenden digitalen Netz verbunden. Der Netzabschluß hat teilnehmerseitig eine S₀-Schnittstelle und netzseitig eine U_{K0}-Schnittstelle. Netzseitig und teilnehmerseitig werden Informationen im Zeitmultiplexverfahren jeweils in einer Rahmenstruktur übertragen. Beide Rahmenstrukturen enthalten jeweils zwei B-Kanäle (64kbit/s) und einen D-Kanal (16 kbit/s). Die Basisanschlußkonfiguration ist eine starre Konfiguration, da sie jedem Teilnehmer die gleiche Übertragungskapazität, nämlich 2 x 64 kbit/s + 1 x 16 kbit/s zur Verfügung stellt.

In der Druckschrift DE 41 24 118 A1 ist ein Fernmeldekonzept mit einer Konzentration von acht analogen Endstellen auf einen ISDN-Basisanschluß beschrieben. Die acht analogen Endstellen sind über einen Multiplexer an den ISDN-Basisanschluß angeschlossen. Gesteuert über eine Vermittlungstechnik können jeweils nur zwei der acht analogen Endstellen gleichzeitig Informationen über die beiden B-Kanäle des ISDN-Basisanschlusses übertragen. Es handelt sich hierbei um ein starres Konzept, das jedem Teilnehmer die gleiche Übertragungskapazität zur Verfügung stellt und außerdem auf analoge Teilnehmerendgeräte beschränkt ist.

In der noch nicht veröffentlichten Patentanmeldung DE 44 05 038 ist eine Netzabschlußeinrichtung eines digitalen Telekommunikationsnetzes mit einer netzseitigen Schnittstelle, wenigstens einer teilnehmerseitigen Schnittstelle und einer Steuereinheit beschrieben. Von den an der netzseitigen Schnittstelle zur Verfügung stehenden Nutzinformationskanälen wird der wenigstens einen teilnehmerseitigen Schnittstelle über die Steuereinheit nach einer vorgegebenen Aufteilung nur ein Teil zugewiesen. Die wenigstens eine teilnehmerseitige Schnittstelle ist eine S₀-Schnittstelle. Damit sind nur digitale Teilnehmerendgeräte mit der Netzabschlußeinrichtung verbindbar.

In US 4,698,801 ist ein digitales Vermittlungssystem offenbart, das Vermittlungsstellen, ein digitales Netzwerk und eine Konvertereinheit zur Bitratenkonversion beinhaltet. Die Konvertereinheit dient zur Anpassung von niederbitratigen Signalen an hochbitratige Signale, die durch das digitale Netzwerk akzeptiert werden. Dazu wird eine Vielzahl niederbitratiger Signale in ein hochbitratiges Signal gemultiplext und ein hochbitratiges Signal in eine Vielzahl niederbitratiger Signale gedemultiplext.

In ntz nachrichtentechnische Zeitschrift, 44(1991), No.10, S.702-710, ist ein digitales Cross-Connect System offenbart. Ein Teilsystem dient zum Anschluß plesionchroner 2-Mbit/s- und 64-kbit/s-Signale entsprechend der CCITT-Empfehlung G.703.

In EP 0 488 685 ist eine ISDN-Schnittstellen-Einheit offenbart, die zum Anschluß eines Personal Computers und eines analogen Telefons dient und über eine digitale Service-Einheit mit dem ISDN verbindbar ist. Die ISDN-Schnittstellen-Einheit beinhaltet eine ISDN-Verbindungs-Schaftung und eine ISDN-Verbindungs-Steuerschaltung.

Es ist deshalb Aufgabe der Erfindung, Nutzinformationskanäle Endstellen flexibler zuzuweisen.

Diese Aufgabe wird durch die Lehre der unabhängigen Patentansprüche 1 und 4 gelöst. Vorteilhafte Ausgestaltungen sind den abhängigen Patentansprüchen zu entnehmen.

Ein besonderer Vorteil der Erfindung liegt in der Erhöhung der Teilnehmeranschlußkapazität in einem bestehenden Telekommunikationsnetz ohne eine aufwendige Verlegung neuer Hauptkabel.

Ein weiterer Vorteil der Erfindung ist die flexiblere, softwaregesteuerte Schaltung von Festverbindungen.

Ein weiterer Vorteil der Erfindung ist die telemetrische Programmierbarkeit der Aufteilung der Nutzinformationskanäle von der Vermittlungsstelle oder vom Knoten aus. Des weiteren sind Vorteile bei der Installation und beim Betrieb von Netzabschlüssen zu erwarten.

Im folgenden wird die Erfindung anhand von vier Ausführungsbeispielen unter Zuhilfenahme der Figuren 1 bis 5 erläutert. Es zeigen:
- Fig. 1: eine schematische Darstellung eines ersten Ausführungsbeispiels des erfindungsgemäßen Telekommunikationssystems
- Fig. 2: einen schematisch dargestellten Aufbau eines Knotens des erfindungsgemäßen Telekommunikationssystems,
- Fig. 3: ein zweites Ausführungsbeispiel einer Netzabschlußeinrichtung des erfindungsgemäßen Telekommunikationssystems,
- Fig. 4: ein drittes Ausführungsbeispiel einer Netzabschlußeinrichtung des erfindungsgemäßen Telekommunikationssystems, und
- Fig. 5: ein viertes Ausführungsbeispiel einer Netzabschlußeinrichtung des erfindungsgemäßen Telekommunikationssystems.

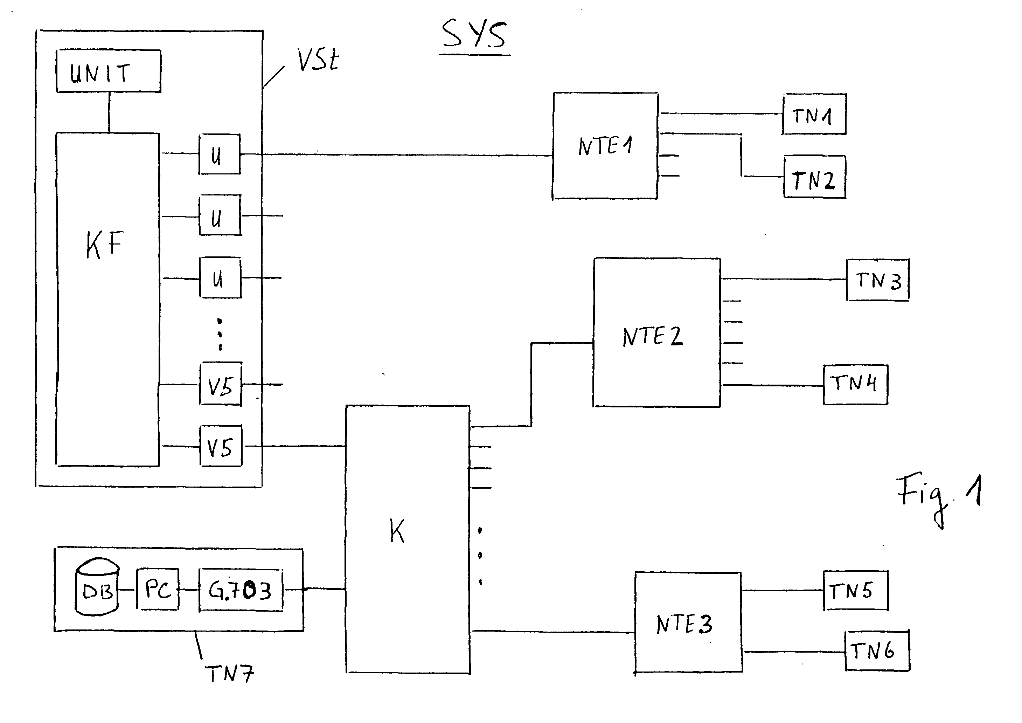

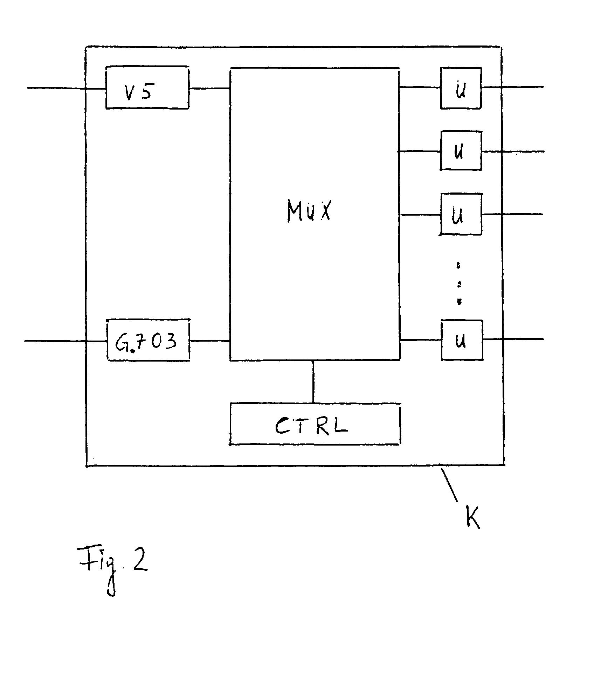

Ein erstes Ausführungsbeispiel der Erfindung wird nun anhand der Figuren 1 und 2 beschrieben. Fig. 1 zeigt eine schematische Darstellung des erfindungsgemäßen Telekommunikationssystems. Das Telekommunikationssystem SYS hat die Struktur eines Telekommunikationsnetzes. Im ersten Ausführungsbeispiel ist das Telekommunikationsnetz ein diensteintegrierendes digitales Netz, das sog. ISDN. Zur Erläuterung der Erfindung werden im folgenden nur die für das Verständnis wesentlichen Teile des Telekommunikationssystems SYS beschrieben.

Das Telekommunikationssystem SYS beinhaltet eine Vermittlungsstelle VSt, einen Knoten K, drei Netzabschlußeinrichtungen NTE1, NTE2, NTE3 und sieben Endstellen TN1 bis TN7.

Die Vermittlungsstelle VSt beinhaltet eine Steuereinheit UNIT, ein Koppelfeld KF, mehrere U-Schnittstellen U und mehrere V5.1-Schnittstellen V5. Eine U-Schnittstelle für den Basisanschluß ist z.B. in dem Buch "Grundlagen der Vermittlungstechnik" (1991), von G. Siegmund, auf den Seiten 179 bis 183 beschrieben. Über die U-Schnittstelle können Nutzinformationen in sog. B-Kanäle mit jeweils 64kbit/s und Signalisierungsinformationen im sog. D-Kanal mit 16 kbit/s übertragen werden.

Eine V5.1 Schnittstelle ist z.B. in der ETSI-Norm ETS 300 324-1 (Feb. 1994) beschrieben. Die V5.1-Schnittstelle ist eine digitale Datenschnittstelle, über die Informationen mit einer Übertragungsgeschwindigkeit von 2,048 Mbit/s übertragbar sind. Die U-Schnittstellen U und die V5.1-Schnittstellen V5 sind jeweils mit dem Koppelfeld KF verbunden. Das Koppelfeld KF ist zusätzlich mit der Steuereinheit UNIT, die z.B. ein Mikroprozessor ist, verbunden. Die Steuereinheit UNIT hat zum einen die Aufgabe, die vermittlungstechnischen Schaltvorgänge im Koppelfeld KF zu steuern und zum anderen die Aufteilung von Nutzinformationskanälen in den Netzabschlußeinrichtungen NTE1, NTE2, NTE3 telemetrisch zu steuern.

Eine U-Schnittstelle U ist mit der Netzabschlußeinrichtung NTE1 verbunden. Die Netzabschlußeinrichtung NTE1 ist teilnehmerseitig mit den Endstellen TN1 und TN2 verbunden.

Eine V5.1-Schnittstelle V5 ist mit dem Knoten K verbunden. Der Knoten K hat mehrere U-Schnittstellen U. Eine U-Schnittstelle U des Knotens K ist mit der Netzabschlußeinrichtung NTE2 verbunden, die teilnehmerseitig mit den Endstellen TN3 und TN4 verbunden ist. Eine weitere U-Schnittstelle U des Knotens K ist mit der Netzabschlußeinrichtung NTE3 verbunden, die mit den Endstellen TN5 und TN6 verbunden ist. Der Knoten K hat zusätzlich eine G.703-Schnittstelle G.703, über die er mit der Endstelle TN7 verbunden ist. Eine G.703-Schnittstelle ist z.B. in der CCITT Recommendation G.703 (Geneva 1972) auf den Seiten 44 bis 68 beschrieben. Eine G.703-Schnittstelle ist eine digitale Schnittstelle, über die Informationen mit einer Übertragungsgeschwindigkeit von z.B. 64 kbit/s, 1,544 Mbit/s, 2,048 Mbit/s oder 32,064 Mbit/s übertragbar sind. Die Endstelle TN 7 hat eine G 703-Schnittstelle G.703, einen Computer PC als Teilnehmerendgerät und eine Datenbank DB.

Die Endstellen TN1 bis TN6 des Telekommunikationssystems SYS können miteinander kommunizieren, indem sie jeweils über die jeweilige Netzabschlußeinrichung NTE1, NTE2, NTE3 und im Falle der Endstellen TN3 bis TN6 über den Knoten K bei der Vermittlungsstelle VSt eine Verbindung zu der jeweiligen Endstelle TN1 bis TN6 anfordern. In der Vermittlungsstelle VSt wird über die Steuereinheit UNIT im Koppelfeld KF die jeweilige Verbindung durchgeschaltet.

Die Endstelle TN7 des Telekommunikationsnetzes SYS kann über den Knoten K eine Festverbindung zu einer der Endstellen TN3 bis TN6 anfordern. Die Festverbindung wird über eine Steuereinrichtung im Knoten K geschaltet.

Fig. 2 zeigt nun einen schematisch dargestellten Aufbau des Knotens K aus Fig. 1. Der Knoten K ist z. B. in einer Vorfeldeinrichtung angeordnet und hat eine V5.1-Schnittstelle V5, eine G.703-Schnittstelle G.703, eine Übertragungseinrichtung MUX, eine Steuereinrichtung CTRL und mehrere U-Schnittstellen U. Als Übertragungseinrichtung ist ein Multiplexer MUX verwendet, der über die Steuereinrichtung CTRL gesteuert und mit der V5.1-Schnittstelle V5, der G.703-Schnittstelle G.703 und den mehreren U-Schnittstellen verbunden ist. Die über die U-Schnittstellen U übertragenen Informationen werden im Multiplexer MUX gemultiplext und über die V5.1-Schnittstelle V5 zur Vermittlungsstelle VSt übertragen. Anstelle des Multiplexers MUX kann als Übertragungseinrichtung MUX auch ein Cross-Connect, der z. B. in Übertragungsnetzen der synchronen digitalen Hierarchie einsetzbar ist, verwendet werden. Ein Cross-Connect ist eine Vorrichtung, die mehrere Eingänge und mehrere Ausgänge hat. Signale, die Nutzinformationen enthalten, können von jedem Eingang zu jedem Ausgang übertragen werden.

Über die Steuereinrichtung CTRL, die z.B. einen Mikroprozessor beinhaltet, kann eine Festverbindung von der G.703-Schnittstelle G.703 über den Multiplexer MUX zu einer U-Schnittstelle U geschaltet werden. An einer U-Schnittstelle U stehen zwei Nutzinformationskanäle, sog. B-Kanäle zur Übertragung von Nutzinformationen zur Verfügung. Die Steuereinrichtung CTRL kann z. B. einen Nutzinformationskanal der G.703-Schnittstelle G.703 und den anderen Nutzinformationskanal der V5.1-Schnittstelle V5 zuweisen. Einer G.703-Schnittstelle können auch mehrere Nutzinformationskanäle zugewiesen werden, z. B. von mehreren U-Schnittstellen U jeweils ein Nutzinformationskanal. Die Steuereinrichtung CTRL kann auch mit einem Netzwerkmanagementsystem verbunden sein, das z.B. Überwachungsfunktionen, Gebührenerfassung, etc. durchführt. Das Netzwerkmanagementsystem kann auch mit der Steuereinheit UNIT in der Vermittlungsstelle VSt verbunden sein, wodurch ein zentrales Management für das Telekommunikationssystem SYS ermöglicht würde.

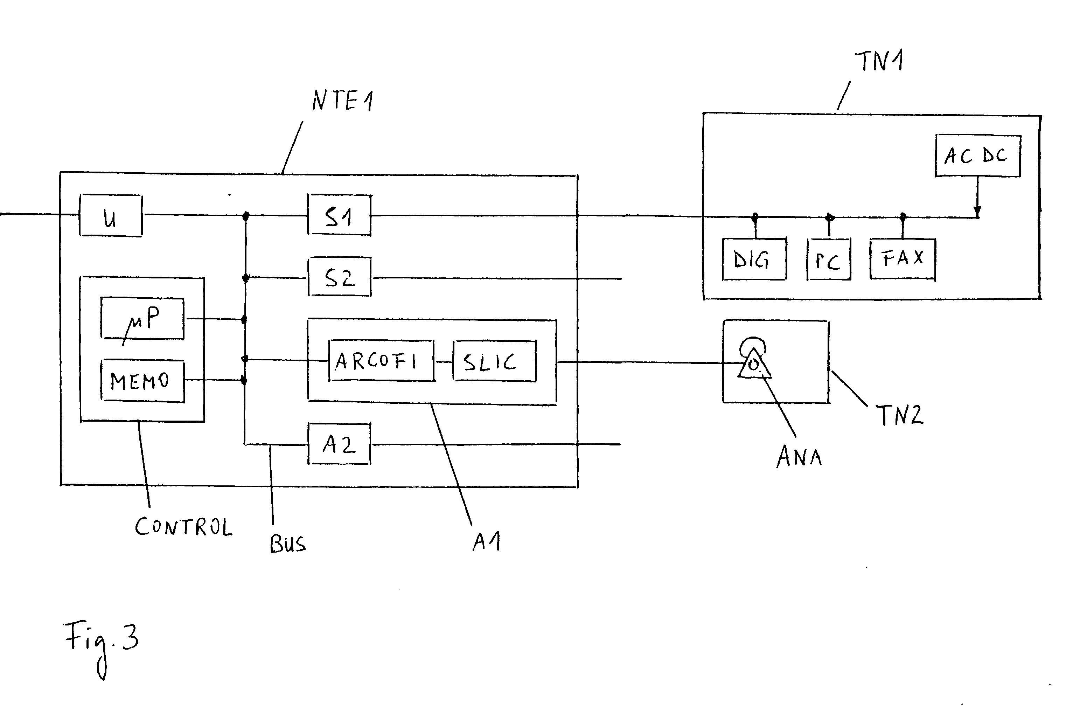

Ein zweites Ausführungsbeispiel der Erfindung wird nun anhand der Fig. 3 beschrieben. Fig. 3 zeigt die Netzabschlußeinrichtung NTE1 aus Fig. 1 in Verbindung mit den Endstellen TN1 und TN2.

Die Netzabschlußeinrichtung NTE1 beinhaltet eine U-Schnittstelle U, zwei Sₒ-Schnittstellen S1, S2, zwei analoge Schnittstellen A1, A2 und eine Steuerung CONTROL, die alle über einen gemeinsamen bidirektionalen Bus BUS miteinander verbunden sind. Eine Sₒ-Schnittstelle ist z.B. aus dem Buch "Grundlagen der Vermittlungstechnik" (1991), von G. Siegmund, auf den Seiten 184 bis 189 beschrieben. Über die Sₒ-Schnittstelle können Nutzinformationen in sog. B-Kanälen mit einer Übertragungsgeschwindigkeit von jeweils 64 kbit/s und Signalisierungsinformationen im sog. D-Kanal mit 16 kbit/s übertragen werden. Die Steuerung CONTROL beinhaltet einen Mikroprozessor µP und einen Speicher MEMO, die jeweils mit dem gemeinsamen Bus BUS verbunden sind.

Die erste Sₒ-Schnittstelle S1 ist teilnehmerseitig mit einer ersten Endstelle TN1 über einen vierdrähtigen Sₒ-Bus verbunden. Die Endstelle TN1 hat als Teilnehmerendgeräte einen digitalen Fernsprechapparat DIG, einen Computer PC und einen Fernkopierer FAX. Die Endstelle TN1 hat zusätzlich eine von der Netzabschlußeinrichtung unabhängige, separate Stromversorgung (ACDC) zur Speisung des Sₒ-Busses. Dadurch ist es möglich, daß die Netzabschlußeinrichtung NTE außerhalb der Räume des Teilnehmers TN1 anordenbar ist, z. B. in einer Vorfeldeinrichtung, die z. B. ein Verteiler sein kann. Die Netzabschlußeinrichtung NTE kann dann z. B. über eine vom Telekommunikationsnetz unabhängige Stromversorgung von der Vermittlungsstelle VSt aus ferngespeist werden.

Die erste analoge Schnittstelle A1 ist teilnehmerseitig mit einer zweiten Endstelle TN2 verbunden, der einen analogen Fernsprechapparat ANA als Teilnehmerendgerät hat. Der analoge Fernsprechapparat wird z. B. von der Vermittlungsstelle VSt aus ferngespeist. Die erste analoge Schnittstelle A1 hat eine Teilnehmerschaltung SLIC und ein Hybrid-Modul ARCOFI, die z.B. aus dem Artikel "Multimediale Kommunikation mit dem ISDN-Telefon Alcatel 2824", von F. Bergler und E. Foth, in der Zeitschrift Elektrisches Nachrichtenwesen, 4. Quartal 1993, auf den Seiten 394 bis 401 bekannt sind. Die Teilnehmerschaltung SLIC (Subscriber Line Interface Circuit) und das Hybrid-Modul ARCOFI (Audio Ringing Codec Filter) haben z.B. die Aufgaben der Zweidraht/Vierdraht-Umsetzung, Kodierung, Filterung und Umsetzung von Impuls- oder Tastwahl ins D-Kanal Protokoll.

Der Aufbau der zweiten Sₒ-Schnittstelle S2 entspricht dem Aufbau der ersten Sₒ-Schnittstelle S1. Der Aufbau der zweiten analogen Schnittstelle A2 entspricht dem Aufbau der ersten analogen Schnittstelle A1. Die zweite Sₒ-Schnittstelle S2 und die zweite analoge Schnittstelle A2 sind unbeschaltet.

Im folgenden wird eine Zuweisung von Nutzinformationskanälen an die Endstellen TN1 und TN2 beschrieben. An der U-Schnittstelle U der Netzabschlußeinrichtung NTE1 stehen netzseitig zwei Nutzinformationskanäle und ein Signalisierungskanal zur Verfügung. Die beiden Nutzinformationskanäle werden auf die beiden Endstellen TN1 und TN2 aufgeteilt; jede Endstelle TN1, TN2 erhält jeweils einen Nutzinformationskanal zur Übertragung von Nutzinformationen zugewiesen. Der Signalisierungskanal wird im Zeitmultiplexverfahren auf die beiden Endstellen TN1 und TN2 aufgeteilt. Dazu wird von der Steuereinheit UNIT in der Vermittlungsstelle VSt eine Zusatzinformation im Signalisierungskanal zur Netzabschlußeinrichtung NTE1 übertragen. Die Zusatzinformation beinhaltet z.B. eine Bitfolge für die Auswahl der Endstelle TN und eine Bitfolge für die Zuweisung eines Nutzinformationskanals zu einer Endstelle TN. Die Aufteilung der Nutzinformationskanäle auf die beiden Endstellen TN1 und TN2 kann z.B. durch das europäische digitale Signalisierungssystem Nr. 1 Protokoll (EDSS1-Protokoll) für den Signalisierungskanal mittels des Dienstemerkmals Mehrfachrufnummer (MSN) realisiert werden. Die Zusatzinformation wird im Speicher MEMO, der z.B. ein RAM (Read Access Memory) ist, abgespeichert und steht somit dem Mikroprozessor µP stets zur Verfügung.

Die Zuweisung der Nutzinformationskanäle erfolgt nach vorgegebener Aufteilung. Ist die Zusatzinformation im Speicher MEMO abgespeichert, so weist der Mikroprozessor µP der Sₒ-Schnittstelle S1 und damit der Endstelle TN1 einen Nutzinformationskanal, der Sₒ-Schnittstelle S2 keinen Nutzinformationskanal, der analogen Schnittstelle A1 und damit der Endstelle TN2 einen Nutzinformationskanl und der analogen Schnittstelle A2 keinen Nutzinformationskanal zu. Die Vorgabe der Aufteilung der Nutzinformationskanäle ist grundsätzlich durch die Vermittlungsstelle VSt oder den Knoten K mittels einer neuen Zusatzinformation veränderbar. Ist eine Aufteilung jedoch einmal festgelegt, so bleibt sie in der Regel bestehen. Der Schutz vor unberechtigtem Zugriff auf die unbeschalteten Schnittstellen S2 und A2 ist durch die Zuweisung keines Nutzinformationskanals, was einem Sperren gleichkommt, gegeben.

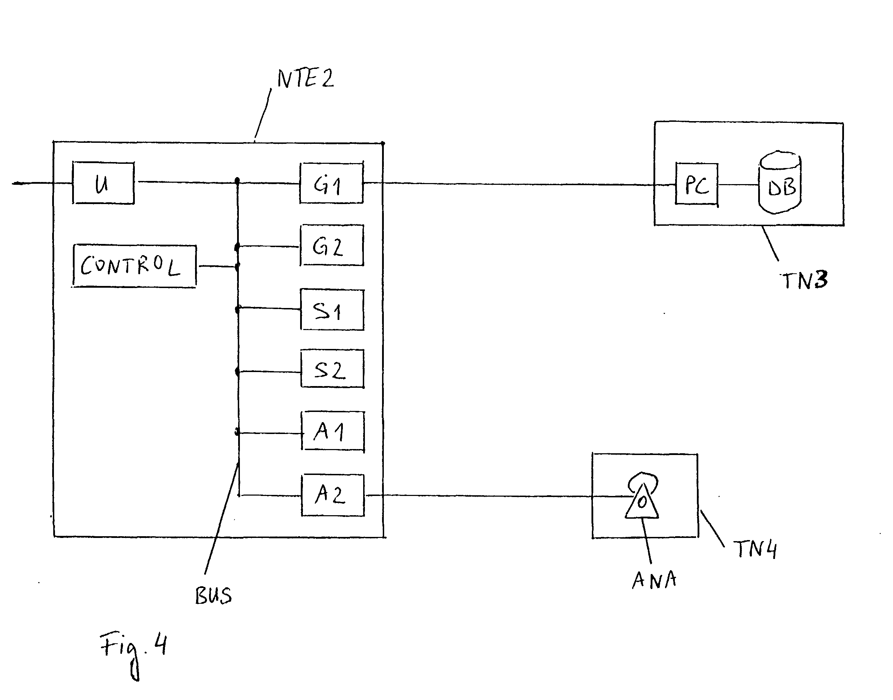

Ein drittes Ausführungsbeispiel der Erfindung wird nun anhand der Fig. 4 beschrieben. Fig. 4 zeigt die Netzabschlußeinrichtung NTE2 aus Fig. 1 in Verbindung mit den Endstellen TN3 und TN4.

Die Netzabschlußeinrichtung NTE2 beinhaltet eine U-Schnittstelle U, zwei G.703 Schnittstellen G1, G2 mit jeweils 64 kbit/s, zwei Sₒ-Schnittstellen S1, S2, zwei analoge Schnittstellen A1, A2 und eine Steuerung CONTROL, die alle über einen gemeinsamen, bidirektionalen Bus BUS miteinander verbunden sind.

Die Endstelle TN3 ist über die erste G.703-Schnittstelle G1 mit der Netzabschlußeinrichtung NTE2 verbinden. Die Endstelle TN3 hat einen Computer PC als Teilnehmerendgerät und eine Datenbank DB. Anstelle des Computers PC kann z. B. auch ein Fernschreibgerät oder eine Nebenstellenanlage als Teilnehmerendgerät verwendet werden.

Die Endstelle TN4 hat einen analogen Fernsprechapparat ANA und ist über die zweite analoge Schnittstelle A2 mit der Netzabschlußeinrichtung NTE2 verbunden.

Die Zuweisung der Nutzinformationskanäle erfolgt auf zwei Arten. Für die Sₒ-Schnittstellen S1, S2 und die analogen Schnittstellen A1, A2 erfolgt die Zuweisung über eine Zusatzinformation von der Vermittlungsstelle VSt oder dem Knoten aus, wie zu Fig. 3 beschrieben. Für die G.703-Schnittstellen G1, G2 erfolgt die Zuweisung über eine Zusatzinformation von der Steuereinrichtung CTRL im Knoten K aus. Zwecks Koordinierung der Zuweisung kann die Aufteilung von einem für die Vermittlungsstelle VSt und den Knoten K gemeinsamen Netzwerkmanagement gesteuert werden.

Ohne gemeinsames Netzwerkmanagement erfolgt die Zuweisung wie folgt: Bei der Initialisierung fordert z.B. zunächst die Endstelle TN4 einen Nutzinformationskanal zum Übertragen von Nutzinformationen an. Die Steuerung CONTROL in der Netzabschlußeinrichtung NTE2 überprüft, ob im Speicher bereits eine Aufteilung abgespeichert ist und überträgt die Anforderung der Endstelle TN4 mit der Speicherinformation zur Vermittlungsstelle VSt. Die Vermittlungsstelle VSt weist der Endstelle TN4 den angeforderten Nutzinformationskanal über die Steuerung CONTROL in der Netzabschlußeinrichtung NTE2 mittels einer Zusatzinformation zu. Die Zusatzinformation wird im Speicher abgespeichert. Die Endstelle TN3 fordert ebenfalls einen Nutzinformationskanal zum Übertragen von Nutzinformationen an. Die Steuerung CONTROL in der Netzabschlußeinrichtung NTE2 erkennt, daß bereits ein Nutzinformationskanal aufgeteilt wurde und überträgt diese Information zusammen mit der Anforderung der Endstelle TN3 zur Steuereinrichtung CTRL im Knoten K. Die Steuereinrichtung CTRL im Knoten K weist der Endstelle TN4 den angeforderten Nutzinformationskanal über die Steuerung CONTROL in der Netzabschlußeinrichtung NTE2 mittels eine Zusatzinformation zu und baut eine Festverbindung zu Teilnehmer TN7 auf. Die Zusatzinformation wird im Speicher MEMO abgespeichert. Damit können die Teilnehmer TN3 und TN7 z.B. Daten über den Nutzinformationskanal übertragen.

Wird nun ein weiterer Nutzinformationskanal angefordert, z.B. von der ersten Sₒ-Schnittstelle S1 aus, so erkennt die Steuerung in der Netzabschlußeinrichtung NTE2, daß die beiden verfügbaren Nutzinformationskanäle bereits aufgeteilt sind und teilt dies der Anforderungsstelle mit. Zusätzlich wird die Anforderung mit der Speicherinformation zur Vermittlungsstelle VSt übertragen, um die Vermittlungsstelle VSt über die Anforderung zu informieren.

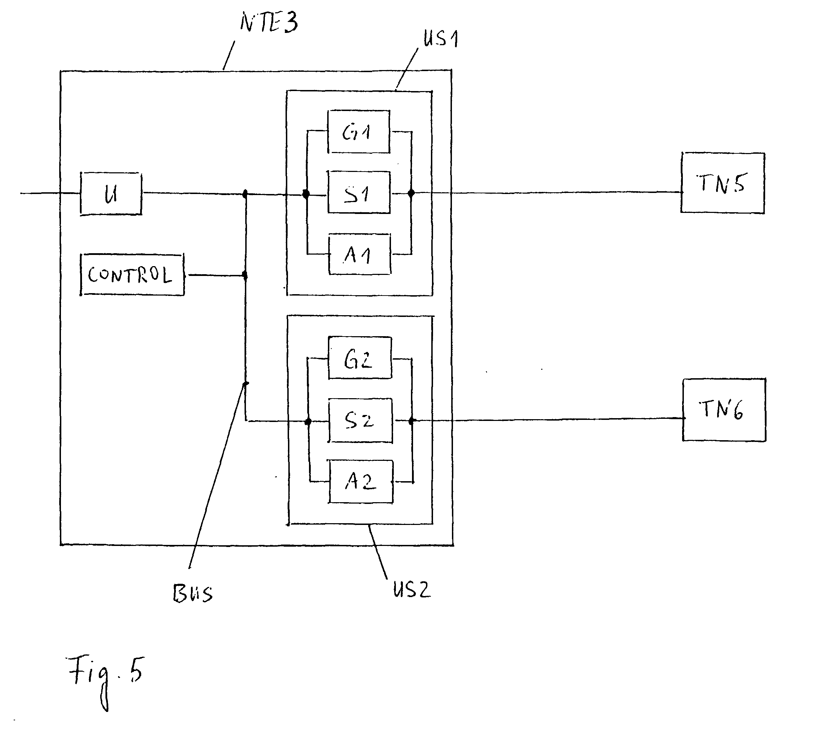

Ein viertes Ausführungsbeispiel der Erfindung wird nun anhand der Fig. 5 beschrieben. Fig. 5 zeigt die Netzabschlußeinrichtung NTE3 aus Fig. 1 in Verbindung mit den Endstellen TN5 und TN6. Die Netzabschlußeinrichtung NTE3 beinhaltet eine U-Schnittstelle U, zwei universelle Schnittstellen US1, US2 und eine Steuerung CONTROL, die alle über einen gemeinsamen, bidirektonalen Bus BUS miteinander verbunden sind.

Die erste universelle Schnittstelle US1 hat eine G.703-Schnittstelle G1 mit 64 kbit/s, eine Sₒ-Schnittstelle S1 und eine analoge Schnittstelle A1, die netzseitig und teilnehmerseitig jeweils miteinander verbunden sind. Die erste universelle Schnittstelle US1 ist teilnehmerseitig mit dem Teilnehmer TN5 verbunden.

Die zweite universelle Schnittstelle US2 ist teilnehmerseitig mit der Endstelle TN6 Verbunden und beinhaltet eine G.703-Schnittstelle G2 mit 64 kbit/s, eine Sₒ-Schnittstelle S2 und eine analoge Schnittstelle A2, die netzseitig und teilnehmerseitig jeweils miteinander verbunden sind.

Die universellen Schnittstellen US1, US2 können teilnehmer individuell konfiguriert werden. So kann z.B. der Endstelle TN5 eine analoge Schnittstelle A1 und der Endstelle TN6 eine G.703-Schnittstelle G2 zur Verfügung gestellt werden oder der Endstelle TN5 werden über die Sₒ-Schnittstelle S1 zwei Nutzinformationskanäle zugewiesen und der zweiten universellen Schnittstelle US2 wird kein Nutzinformationskanal zugewiesen.

Die Zuweisung der Nutzinformationskanäle erfolgt vergleichbar der Zuweisung wie sie zu Fig. 4 beschrieben ist.

Bei den vier Ausführungsbeispielen liegt ein diensteintegrierendes digitales Netz als Telekommunikationsnetz vor. An den Netzabschlußeinrichtungen NTE1, NTE2, NTE3, werden netzseitig zwei Nutzinformationskanäle und ein Signalisierungskanal zur Verfügung gestellt. Die Erfindung kann auch bie einem anderen Netz als dem diensteintegrierenden digitalen Netz angewendet werden. Das andere Netz kann z.B. mehr als zwei Nutzinformationskanäle und möglicherweise auch mehr als einen Signalisierungskanal an den Netzabschlußeinrichtungen NTE zur Verfügung stellen. Damit könnten z.B. mehr als zwei Endstellen TN mit einer Netzabschlußeinrichtung NTE verbunden werden oder zwei Endstellen TN könnte eine erhöhte Übertragungskapazität zur Verfügung gestellt werden.

Beim ersten Ausführungsbeispiel hat der Knoten K eine V5.1-Schnittstelle V5. Anstelle der V5.1-Schnittstelle V5 kann auch eine z.B. aus der ETSI-Norm pr ETS 300 347-1 (April 1994) bekannte V5.2-Schnittstelle verwendet werden. Des weiteren kann ein Knoten K auch mehrere V5.1-Schnittstellen V5 und/oder mehrere V5.2 Schnittstellen haben. Die Vermittlungsstelle VSt kann zusätzlich ein oder mehrere V5.2-Schnittstellen beinhalten.

Im ersten Ausführungsbeispiel hat das Telekommunikationssystem SYS eine Vermittlungsstelle VSt. Das Telekommunikationssystem SYS kann auch mehrere Vermittlungsstellen VSt beinhalten. Ferner können zwischen Vermittlungsstelle VSt und Netzabschlußeinrichtungen NTE Verteiler, Kabelverzweiger, Konzentratoren und/oder Multiplexer eingefügt sein. Des weiteren kann das Telekommunikationsnetz z.B. ein öffentliches Netz und die Endstelle TN7 z.B. ein privates Netz mit mehreren Endstellen sein, die über die G.703-Schnittstelle mit z.B. 32,064 Mbit/s Zugang zum öffentlichen Netz haben. Für die Teilnehmer des privaten Netzes können z.B. Festverbindungen als Stand- oder Mietleitungen zu ein oder mehreren mit dem öffentlichen Netz verbundenen Endstellen eingerichtet werden.

## Patentansprüche

1. Telekommunikationssystem (SYS) mit einer Vermittlungsstelle (VSt), einem Knoten (K) und mehreren Netzabschlüssen zum Verbinden mit mehreren analogen und/oder digitalen Teilnehmerendgeräten (ANA, PC, DIG, FAX), bei dem der Knoten (K) eine Übertragungseinrichtung (MUX), eine Steuereinrichtung (CTRL) und wenigstens eine Schnittstelle (G.703) zur Anbindung an mindestens eine Endstelle (TN7) beinhaltet, bei dem die Übertragungseinrichtung (MUX) mit der Steuereinrichtung (CTRL), der wenigstens einen Schnittstelle (G.703), der Vermittlungsstelle (VSt) und den mehreren Netzabschlüssen verbunden ist,
bei dem über einen einzelnen Netzabschluß Nutzinformationen in mehreren Nutzinformationskanälen übertragbar sind und
bei dem über die Steuereinrichtung (CTRL) die Übertragungseinrichtung (MUX) derart ansteuerbar ist, daß der Vermittlungsstelle (VSt) und der wenigstens einen Schnittstelle (G.703) jeweils ein Teil der an den jeweiligen Netzabschlüssen verfügbaren Nutzinformationskanälen nach vorgegebener Aufteilung zuweisbar ist,
bei dem wenigstens ein Netzabschluß als Netzabschlußeinrichtung (NTE) ausgeführt ist, die eine netzseitige Schnittstelle (U) zur Anbindung an die Vermittlungsstelle (VSt) oder den Knoten (K), mehrere teilnehmerseitige Schnittstellen (S1, S2, A1, A2, G1, G2, US1, US2) zur Anbindung an mehrere Endstellen (TN1 - TN6) und eine Steuerung (CONTROL) sowie einen Speicher (MEMO) hat, wobei über die Steuerung (CONTROL) den mehreren teilnehmerseitigen Schnittstellen (S1, S2, A1, A2, G1, G2, US1, US2) jeweils ein Teil der netzseitig verfügbaren Nutzinformationskanäle each vorgegebener Aufteilung zuweisbar ist und in dem Speicher (MEMO) die Information über die Aufteilung speicherbar ist, und
bei dem die Information über die Aufteilung der Nutzinformationskanäle von einer Steuereinheit (UNIT) in der Vermittlungsstelle (VSt) in einer Zusatzinformation in einem Signalisierungskanal zum jeweiligen Netzabschluß übertragbar ist.

2. Telekommunikationssystem (SYS) nach Anspruch 1, **dadurch gekennzeichnet, daß** die wenigstens eine Schnittstelle (G.703) eine Schnittstelle nach CCITT Recommendation G.703 ist.

3. Telekommunikationssystem (SYS) nach Anspruch 1, **dadurch gekennzeichnet, daß** die Steuereinheit (UNIT) derart ausgestaltet ist, den Signalisierungskanal im Zeitmultiplexverfahren auf mehrere Teilnehmer (TN) aufzuteilen.

4. Netzabschlußeinrichtung (NTE) zum Abschluß eines digitalen Telekommunikationsnetzes, mit einer netzseitigen Schnittstelle (U) zur Anbindung an eine Vermittlungsstelle (VSt) oder einen Knoten (K), mit mehreren teilnehmerseitigen Schnittstellen (S1, S2, A1, A2, G1, G2, US1, US2) zur Anbindung an mehrere Endstellen (TN1 - TN6) und mit einer Steuerung (CONTROL),
bei der über die netzseitige Schnittstelle (U) Nutzinformationen in mehreren Nutzinformationskanälen übertragbar sind,
bei der über die Steuerung (CONTROL) den mehreren teilnehmerseitigen Schnittstellen (S1, S2, A1, A2, G1, G2, US1, US2) jeweils ein Teil der netzseitig verfügbaren Nutzinformationskanäle nach vorgegebener Aufteilung zuweisbar ist,
bei der wenigstens eine teilnehmerseitige Schnittstelle (S1, S2, A1, A2, G1, G2, US1, US2) eine analoge Schnittstelle (A1, A2, US1, US2) und/oder wenigstens eine teilnehmerseitige Schnittstelle (S1, S2, A1, A2, G1, G2, US1, US2) eine digitale Schnittstelle (S1, S2, G1, G2, US1, US2) ist, und
bei der die Steuerung (CONTROL) einen Speicher (MEMO) hat, in dem die Information über die Aufteilung speicherbar ist.

5. Netzabschlußeinrichtung (NTE) nach Anspruch 4, **dadurch gekennzeichnet, daß** das Telekommunikationsnetz ein diensteintegrierendes digitales Netz, die netzseitigen Schnittstellen (U) eine U-Schnittstelle, und wenigstens eine teilnehmerseitige Schnittstelle (S1, S2, A1, A2, G1, G2, US1, US2) eine S₀-Schnittstelle (S1, S2) oder eine Schnittstelle (G1, G2) nach CCITT Recommendation G.703 ist.

6. Netzabschlußeinrichtung (NTE) nach Anspruch 4, **dadurch gekennzeichnet, daß** die Netzabschlußeinrichtung (NTE) außerhalb der Räume der Teilnehmer (TN) anordenbar ist.

## Claims

1. Telecommunication system (SYS) with a switching center (VSt), a node (K) and several network terminations for connecting to several analog and/or digital user terminals (ANA, PC, DIG, FAX), the node (K) containing a transmission facility (MUX), a control unit (CTRL) and at least one interface (G.703) for linking to at least one terminal station (TN7), the transmission facility (MUX) being connected to the control unit (CTRL), the at least one interface (G.703), the switching center (VSt) and the several network terminations,
in which via a single network termination, user data can be transferred in several user information channels and
in which with the control unit (CTRL), the transmission facility (MUX) can be steered in such a way that a part of the user information channels available at each of the network terminations can be assigned to the switching center (VSt) and the at least one interface (G.703) according to a predefined apportionment,
in which at least one network termination is executed as a network termination unit (NTE), which has a network-side interface (U) for linking to the switching center (VSt) or the node (K), several user-side interfaces (S1, S2, A1, A2, G1, G2, US1, US2) for linking to several terminal stations (TN1 - TN6) and a control (CONTROL) and a memory (MEMO), it being possible with the control (CONTROL) to assign a part of the available network-side user information channels to each of the several user-side interfaces (S1, S2, A1, A2, G1, G2, US1, US2) according to a predefined apportionment, and to store the information about the apportionment in the memory (MEMO), and
in which the information about the apportionment of the user information channels can be transferred in an additional item of information in a signaling channel to the relevant network termination from a control unit (UNIT) in the switching center (VSt).

2. Telecommunication system (SYS) as claimed in Claim 1, **characterized in that** the at least one interface (G.703) is an interface according to CCITT Recommendation G.703.

3. Telecommunication system (SYS) as claimed in Claim 1, **characterized in that** the control unit (UNIT) is developed in such a way as to apportion the signaling channel in the time division multiplex method to several users (TN).

4. Network termination unit (NTE) for terminating a digital telecommunication network, with a network-side interface (U) for linking to a switching center (VSt) or a node (K), with several user-side interfaces (S1, S2, A1, A2, G1, G2, US1, US2) for linking to several terminal stations (TN1 - TN6) and with a control (CONTROL),
in which user data is transferable in several user information channels over the network-side interface (U),
in which it is possible with the control (CONTROL) to assign a part of the available network-side user information channels to each of the several user-side interfaces (S1, S2, A1, A2, G1, G2, US1, US2) according to a predefined apportionment,
in which at least one user-side interface (S1, S2, A1, A2, G1, G2, US1, US2) is an analog interface (A1, A2, US1, US2) and/or at least one user-side interface (S1, S2, A1, A2, G1, G2, US1, US2) is a digital interface (S1, S2, G1, G2, US1, US2), and
in which the control (CONTROL) has a memory (MEMO) in which the information about the apportionment can be stored.

5. Network termination unit (NTE) as claimed in Claim 4, **characterized in that** the telecommunication network is an integrated services digital network, the network-side interfaces (U) a U interface and at least one user-side interface (S1, S2, A1, A2, G1, G2, US1, US2) is an S₀ interface (S1, S2) or an interface (G1, G2) according to CCITT Recommendation G.703.

6. Network termination unit (NTE) as claimed in Claim 4, **characterized in that** the network termination unit (NTE) can be arranged outside the space of the users (TN).

## Revendications

1. Système de télécommunication (SYS) avec un centre de commutation (VSt), un noeud (K) et plusieurs terminaisons réseau pour relier plusieurs terminaux d'abonnés analogiques et/ou numériques (ANA, PC, DIG, FAX), avec lequel le noeud (K) contient un dispositif de transmission (MUX), un dispositif de commande (CTRL) et au moins une interface (G.703) pour la liaison avec au moins une station terminale (TN7), avec lequel le dispositif de transmission (MUX) est relié au dispositif de commande (CTRL), la au moins une interface (G.703), le centre de commutation (VSt) et les plusieurs terminaisons réseau,
avec lequel des informations utiles peuvent être transmises au moyen d'une terminaison réseau individuelle dans plusieurs canaux d'information utile et
avec lequel le dispositif de transmission (MUX) peut être commandé par le dispositif de commande (CTRL) de telle sorte que respectivement une partie des canaux d'information utile disponibles sur les terminaisons réseau respectives peut être attribuée selon une répartition prédéfinie au centre de commutation (VSt) et à la au moins une interface (G.703),
avec lequel au moins une terminaison réseau est réalisée sous la forme d'un appareil de terminaison réseau (NTE), qui a une interface (U) côté réseau pour le rattachement au centre de commutation (VSt) ou au noeud (K), plusieurs interfaces côté abonné (S1, S2, A1, A2, G1, G2, US1, US2) pour le rattachement à plusieurs stations terminales (TN1-TN6) et une commande (CONTROL) ainsi qu'une mémoire (MEMO), moyennant quoi une partie des canaux d'information utile disponibles côté réseau peut être attribuée selon une répartition prédéfinie par la commande (CONTROL) à chacune des plusieurs interfaces côté abonné (S1, S2, A1, A2, G1, G2, US1, US2) et l'information sur la répartition est stockable dans la mémoire (MEMO), et
avec lequel l'information sur la répartition des canaux d'information utile peut être transmise d'une unité de commande (UNIT) au centre de commutation (VSt) dans une information supplémentaire dans un canal de signalisation à la terminaison réseau respective.

2. Système de télécommunication (SYS) selon la revendication 1, **caractérisé en ce que** la au moins une interface (G.703) est une interface selon CCITT Recommendation G.703.

3. Système de télécommunication (SYS) selon la revendication 1, **caractérisé en ce que** l'unité de commande (UNIT) est conçue de façon à répartir le canal de signalisation dans un procédé de multiplexage temporel entre plusieurs abonnés (TN).

4. Appareil de terminaison réseau (NTE) pour la terminaison d'un réseau de télécommunication numérique avec une interface côté réseau (U) pour le rattachement à un centre de commutation (VSt) ou un noeud (K), avec plusieurs interfaces côté abonné (S1, S2, A1, A2, G1, G2, US1, US2) pour le rattachement à plusieurs stations terminales (TN1-TN6) et avec une commande (CONTROL),
avec lequel des informations utiles peuvent être transmises dans plusieurs canaux d'information utile par l'interface côté réseau (U),
avec lequel une partie des canaux d'information utile disponibles côté réseau peut être attribuée selon une répartition prédéfinie par la commande (CONTROL) à chacune des plusieurs interfaces côté abonné (S1, S2, A1, A2, G1, G2, US1, US2),
avec lequel au moins une interface côté abonné (S1, S2, A1, A2, G1, G2A, US1, US2) est une interface analogique (A1, A2, US1, US2) et/ou au moins une interface côté abonné (S1, S2, A1, A2, G1, G2, US1, US2) est une interface numérique (S1, S2, G1, G2, US1, US2), et avec lequel la commande (CONTROL) a une mémoire (MEMO), dans laquelle l'information sur la répartition peut être stockée.

5. Appareil de terminaison réseau (NTE) selon la revendication 4, **caractérisé en ce que** le réseau de télécommunication est un réseau numérique intégrant des services, les interfaces côté réseau (U) sont une interface de U, et au moins une interface côté abonné (S1, S2, A1, A2, G1, G2, US1, US2) est une interface de Sₒ (S1, S2) ou une interface (G1, G2) conforme à la CCITT Recommendation G.703.

6. Appareil de terminaison réseau (NTE) selon la revendication 4, **caractérisé en ce que** l'appareil de terminaison réseau (NTE) peut être disposé en dehors des locaux des abonnés (TN).
